# FASCICULE DE BREVET EUROPEEN

(11) **EP 0 954 787 B1**
(45) Date de publication et mention de la délivrance du brevet: **04.10.2001**
(21) Numéro de dépôt: 98904234.6
(22) Date de dépôt: 28.01.1998
(51) Int. Cl.: G06F 11/34, H04L 12/24

(54) **PROCEDE ET SYSTEME DE MESURE DES PERFORMANCES ET DE SUIVI DE LA QUALITE DE SERVICE D'UN SYSTEME D'INFORMATION**
VERFAHREN UND SYSTEM ZUR LEISTUNGMESSUNG UND BEOBACHTUNG DER QUALITAET EINES INFORMATIONSSYSTEM
METHOD AND SYSTEM FOR EVALUATING PERFORMANCE AND MONITORING QUALITY OF SERVICE OF AN INFORMATION SYSTEM

(30) Priorité: 29.01.1997 FR 9700966
(43) Date de publication de la demande: 10.11.1999
(73) Titulaire: Infovista S.A., 91140 Villebon-sur-Yvette (FR)
(72) Inventeur: RIES, Alain, F-78350 Jouy-en-Josas (FR); MATHIEU, Loic, F-94230 Cachan (FR); STOPNICKI, Manuel, F-75011 Paris (FR)
(74) Mandataire: Pontet, Bernard
(86) Numéro de dépôt international: FR9800150
(87) Numéro de publication internationale: WO9833122

(56) Documents cités:
- S.L. BERNSTEIN: "NU: a Network Monitoring, Control, and Management System" CONFERENCE RECORD OF THE IEEE CONFERENCE ON COMMUNICATIONS, ICC '83, vol. 1 of 3, 19 - 22 juin 1983, BOSTON, MASSACHUSETTS, US, pages 478-483, XP002041874
- "PROCESS FOR REAL-TIME, TRACE-DRIVEN PERFORMANCE MONITORS" IBM TECHNICAL DISCLOSURE BULLETIN, vol. 34, no. 5, 1 octobre 1991, ARMONK, NJ, US, pages 415-417, XP000189771
- T.K. APOSTOLOPOULOS ET AL.: "A Model for SNMP Based Performance Management Services" PROCEEDINGS OF IEEE SINGAPORE INTERNATIONAL CONFERENCE ON NETWORKS/INTERNATIONAL CONFERENCE ON INFORMATION ENGINEERING 1995, 3 - 7 juillet 1995, SINGAPORE, pages 269-273, XP002041821
- YING-DAR LIN ET AL: "A FRAMEWORK FOR LEARNING AND INFERENCE IN NETWORK MANAGEMENT" GLOBECOM '92, COMMUNICATION FOR GLOBAL USERS, INCLUDING A COMMUNICATIONS THEORY MINI CONFERENCE ORLANDO, DEC. 6 - 9, 1992, vol. 1 - 2 - 03, 6 décembre 1992, INSTITUTE OF ELECTRICAL AND ELECTRONICS ENGINEERS, pages 560-564, XP000357845

## Description

La présente invention concerne un procédé de mesure des performances et de suivi de la qualité de service d'un système d'information. Elle vise également un système d'information décisionnel mettant en oeuvre ce procédé.

La complexité croissante des systèmes d'information qui intègrent notamment des architectures clients-serveurs et des réseaux locaux intégrés, rend de plus en plus difficile une gestion efficace de la qualité de service au sein de ces systèmes. D'une part, les administrateurs et responsables de ces systèmes d'information sont amenés à adopter une démarche de service à l'égard des utilisateurs et à opérer en tant que prestataires de service soucieux de la qualité des services fournis tout en étant confrontés à des réductions de coût d'exploitation, et d'autre part, les utilisateurs de ces services réclament des niveaux de qualité de service toujours plus élevés.

La maîtrise de la qualité de service implique un système fiable de remontée des informations pertinentes en provenance des différentes ressources du système d'information. Il est cependant ardu d'exploiter des gisements de données de performance de grand volume résidant dans les équipements d'un réseau, dans les systèmes et dans les applications logicielles, de consolider ces données, puis de les restituer sous forme de tableaux de bord synthétiques à des fins de gestion de capacité ou de qualité de service. Il est recherché, d'une part, une gestion de la qualité de service au niveau de l'utilisateur: disponibilité, temps de réponse applicatif, réactivité face à un incident d'un support technique, et d'autre part, une gestion de la qualité de service technique relative à l'infrastructure elle-même: trafic, temps de transit réseau, consommation en temps d'unité centrale, etc..

Il existe déjà des produits logiciels fournissant des informations de gestion de qualité de service au sein de systèmes d'information, tels que "TRENDsnmp+", édité par la compagnie DESKTALK Systems Inc., qui est constitué d'une ensemble d'application génériques pour la collecte de données, leur agrégation, la gestion et la génération de rapports et de tableaux de bord. Ce logiciel peut traiter des données provenant de tout équipement supportant le protocole SNMP (Simple Network Management Protocol), et inclut un support spécialisé pour le standard Remote Monitoring (RMON) MIB.

On connaît également le produit "Network Health" édité par la compagnie CONCORD. Ce produit consiste en une famille de solutions automatisées d'analyse de réseau et de génération de rapport.

Il existe également le produit "Perfagent" édité par la compagnie ACANTHE SOFTWARE. Ce produit est un générateur de tableaux de bord d'exploitation multi-plateformes pour un environnement SNMP. Il procure un suivi temps réel, un archivage d'Indicateurs en bas de données relationnelles et une analyse en temps différé de l'état des composantes d'un réseau ou d'un système d'information.

Le produit "ISM statistics" édité par la compagnie BULL automatise la collecte, la gestion des données ainsi que l'édition de rapports pour la gestion statistique d'un système d'information. Les données collectées sont organisées autour de classes d'objets qui représentent les éléments réels du réseau. Pour chaque classe d'objet, ce produit fournit des données, appelées Indicateurs, représentatives de la charge ou de l'activité de chaque objet. Il procède au traitement des Indicateurs, notamment par synthèse ou filtrage. Les informations sont stockées dans une base de données relationnelle.

Le produit "Performance Reporter" édité par la compagnie IBM, fournit également un ensemble de tableaux de bord et de rapports en vue de gérer la qualité de service d'un système d'information, et supporte notamment le protocole SNMP.

On peut également citer le produit de gestion de réseau "SPECTRUM" édité par la compagnie CABLETRON SYSTEMS Inc. Ce produit intègre notamment un module de gestion de la qualité de service à partir d'une modélisation inductive du réseau. Le document WO9626588 (Cabletron Systems) divulgue un procédé pour gérer des configurations d'un réseau comprenant un groupage d'au moins un élément de réseau pour constituer un groupe de réseau. Un identificateur est fourni pour chaque équipement de réseau et une base de données est modifiée pour contenir une relation entre équipement et un identificateur de groupe.

Le document US5459837 (Digital Equipment Corporation) divulgue un procédé et un système pour mesurer la performance de serveurs au sein d'un réseau.

L'article "A Model for SNMP Based Performance Management Services", de T.K. APOSTOLOPOULOS, paru dans PROCEEDINGS OF IEEE SINGAPORE INTERNATIONAL CONFERENCE ENGINEERING 1995, 3-7 Juillet 1995, pages 269-273, XP002041821, divulgue un procédé de mesure de performances et de suivi de la qualité d'un système d'information comportant une collecte de données au sein de ce système d'information, notamment des données collectées par polling en temps réel et des collectées en temps différé, un traitement de ces données collectées et une fourniture de rapports de performance ou de qualité de service.

Or, les procédés actuels de gestion de qualité présentent plusieurs inconvénients pour une mise en oeuvre dans des systèmes d'informations présentant un niveau d'hétérogénéité élevé et dans lesquels cohabitent plusieurs sources de données internes et externes. Un inconvénient majeur réside dans le fait que ces procédés mettent en oeuvre un traitement différé des données collectées.

Le but de la présente invention est de proposer un procédé de mesure des performances et de suivi de la qualité de service au sein d'un système d'information, qui puisse prendre en compte une hétérogénéité à la fois matérielle, structurelle et fonctionnelle, tout en étant indépendant de protocoles particuliers d'acquisition de données.

Cet objectif est atteint avec un procédé pour mesurer les performances et le suivi de la qualité de service d'un système d'information, ce procédé comprenant:
- une étape de collecte de données au sein de ce système d'information, en provenance de diverses sources de données, notamment:
   1) des données de différents types collectées par polling en temps réel,
   2) des données de différents types, notamment des données continues ou discrètes (événements) collectées en temps réel en provenance d'une source externe, et
   3) des données, notamment des données continues ou discrètes (événements) collectées en temps différé en provenance d'une source externe,
- une étape de traitement de ces données et calculer des indicateurs, et
- une fourniture de rapports sur la qualité de service au sein de ce système d'information.

Suivant l'invention, le procédé comprend en outre une étape d'homogénéisation des données collectées, dans laquelle les différences entre les types desdites données collectées sont masquées de sorte que l'étape suivante de traitement ne porte que sur un seul type de données collectées en temps réel et que sur un seul type de données collectées en temps différé.

3) des données, notamment des données continues ou discrètes (événements), acquises en temps différé en provenance d'une source externe.

On entend par polling un mécanisme par lequel un processus maître interroge régulièrement un processus agent local ou distant afin de le solliciter, par exemple par un envoi de données.

L'acquisition de données en provenance d'une source externe se distingue du polling en ce que, dans ce cas, le serveur ne contrôle pas les instants d'arrivée des données en provenance de cette source externe.

Ainsi, grâce au processus d'homogénéisation mis en oeuvre allié à une modélisation orientée objet du système d'information, le procédé selon l'invention peut avantageusement masquer la complexité technique des objets gérés, que ce soient des applications, des systèmes, des équipements réseaux ou de télécommunication, en offrant la possibilité d'une agrégation en temps réel.

Dans une forme particulière de réalisation du processus d'homogénéisation, celui comprend une étape, dite d'abstraction de polling, pour regrouper des données collectées en temps réel en provenance de diverses sources de données. Le procédé peut en outre avantageusement comprendre une étape, dite d'abstraction d'acquisition, pour homogénéiser (i) : des données en temps réel issues de l'étape d'abstraction de polling et (ii): des données acquises en temps différé, ces données homogénéisées étant représentées par des objets rattachés aux objets issus de la modélisation du système d'information et concernés par ces données.

En pratique, les étapes respectives d'abstraction de polling et d'abstraction d'acquisition peuvent être implémentées sous la forme d'une première couche logicielle d'abstraction de polling et d'une seconde couche d'abstraction d'acquisition.

De préférence, les objets traités et générés sont tous stockés dans une base de données objet, accessible pour tout consultation ultérieure.

Avec le procédé selon l'invention, il devient possible de visualiser la qualité de service sous un angle opérationnel, géographique, technique ou commercial. Ce procédé permet de fournir des tableaux de bord synthétiques de performances et de coûts, en conservant un historique de l'activité et des écarts par rapport à des objectifs de service sur une période donnée et sur un périmètre défini. Ces tableaux de bord permettent de contrôler la qualité de service fournie aux utilisateurs, d'anticiper les dérives et de prendre les décisions nécessaires afin de garantir et de respecter les engagements de service. Un responsable de systèmes ou de réseaux peut ainsi suivre sur une longue période ou en temps réel, des Indicateurs techniques portant sur les objets du système d'information gérés par le procédé selon l'invention: serveurs, équipements de réseau et de télécommunication, applications spécifiques ou progiciels, etc.. Le procédé selon l'invention regroupe des informations de provenances diverses, afin de pouvoir les agréger, les corréler entre elles et fournir des tableaux de bord de niveau décisionnel.

Dans une forme préférée de mise en oeuvre du procédé selon l'invention, un Indicateur contient une pluralité de Formules requérant chacune un ensemble de Variables, et le processus de traitement comprend, pour chaque Indicateur demandé dans un rapport, un choix dynamique d'une Formule parmi la pluralité de Formules associées à cet Indicateur, ce choix étant notamment déterminé en fonction de la disponibilité respective des variables requises par chacune desdites Formules dans la source de données utilisée et en fonction des priorités attribuées à chacune des Formules.

Le procédé selon l'invention utilise également de façon avantageuse des techniques d'entreposage de données (data warehousing), notamment pour conserver un historique de toutes les informations collectées. Il prend en compte et mémorise les évolutions (ajouts, suppressions, modifications d'objets) du système d'information, et les répercute automatiquement dans les tableaux de bord concernés.

Le procédé de qualité selon l'invention comprend en outre un générateur de rapports combinant une interface intuitive de type WYSIWYG (What You See Is What You Get) et des fonctions avancées, notamment une navigation par explorateur, un formatage intuitif des tableaux de bord, une bibliothèque de fonctions pour composer ou personnaliser des Indicateurs. Ces fonctions incluent notamment des fonctions booléennes, des fonctions de calcul et d'agrégat, des fonctions conditionnelles, temporelles, et de distribution statistique.

Le procédé selon l'invention peut avantageusement être intégré dans tout environnement de pilotage ou d'administration existant. Il peut être mis en oeuvre de manière autonome ou en complément d'une plate-forme d'administration et pour récupérer toutes les données recueillies sur des équipements et applications par des sondes matérielles, logicielles ou des automates déjà installés. Ce procédé peut être implémenté sous la forme d'une application fonctionnant en mode client-serveur, indifféremment sous Unix et Windows NT, entre autres.

Suivant un autre aspect de l'invention, il est proposé un système pour gérer la qualité de service au sein d'un système d'information, mettant en oeuvre le procédé selon l'invention, ce système comprenant:
- des moyens pour collecter des données de différents types en provenance de diverses sources de données au sein du système d'information,
- des moyens pour traiter les données collectées et pour fournir des indicateurs de qualité de service, et
- des moyens pour générer des rapports et/ou graphes à partir de ces indicateurs,
caractérisé en ce qu'il comprend en outre des moyens pour homogénéiser des données collectées en provenance de diverses sources de données, agencés pour masquer les différences entre les types de données collectées de sorte que les moyens de traitement ne traitent qu'un seul type de données collectées en temps réel et un seul type de données en temps différé.

D'autres particularités et avantages de l'invention apparaîtront encore dans la description ci-après. Aux dessins annexés donnés à titre d'exemples non limitatifs:
- la figure 1 représente schématiquement un système d'information dans lequel le procédé de suivi de qualité de service est mis en oeuvre;
- la figure 2 représente schématiquement les interactions entre le procédé selon l'invention et le système d'information;
- la figure 3 illustre schématiquement les couches principales d'un logiciel implémentant le procédé selon l'invention;
- la figure 4 représente un exemple de fenêtre utilisée dans un logiciel mettant en oeuvre le procédé selon l'invention;
- les figures 5A, 5B, et 5C représentent schématiquement des relations concernant les Instances, les Groupes et les Indicateurs;
- la figure 6 est un schéma-bloc explicitant la structure des Indicateurs mis en oeuvre dans le procédé selon l'invention;
- la figure 7 est un schéma-bloc explicitant la structure des "slots" de données au sein du procédé selon l'invention; et
- la figure 8 est un diagramme illustrant un mécanisme de modélisation de rapport au sein du procédé selon l'invention.

On va tout d'abord préciser un ensemble de définitions et de concepts qui seront utilisés tout au long de la présente description.

Le procédé selon l'invention utilise une modélisation orientée-objet du système d'information. Les éléments de ce système sont représentés avec plusieurs classes d'objet. Chaque classe d'objet a un certain nombre d'attributs qui définissent l'objet.

Le modèle peut être divisé en trois domaines:
- le modèle de l'infrastructure (réseaux, systèmes et applications),
- le modèle des données collectées et des Indicateurs,
- le modèle des Rapports qui seront générés.

Les objets du procédé selon l'invention sont utilisés pour modéliser ces domaines.

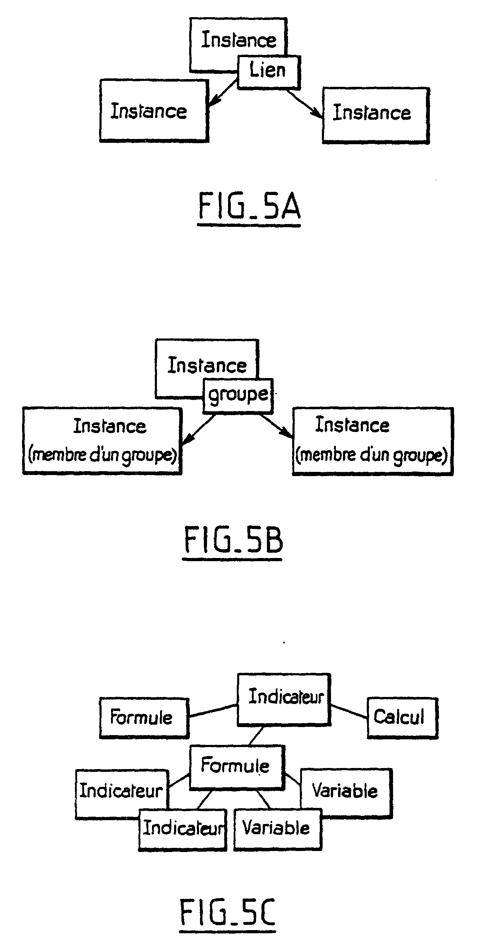

On va maintenant décrire les aspects principaux d'une modélisation de réseau mise en oeuvre dans le procédé selon l'invention. Un élément géré dans le réseau est représenté par une Instance. Des Instances peuvent être reliées par des liens (Figure 5A) et être membres d'un groupe (Figure 5B). Un élément géré possède plusieurs attributs appelés valeurs de Propriété. L'élément géré peut avoir plusieurs caractéristiques qui sont chacune définies par une Vista. La Vista définit quelles Propriétés l'Instance doit avoir.

L'objet Vista représente une facette, une catégorie à laquelle un élément peut appartenir, ou caractéristique fondamentale d'un élément. Il indique les propriété de cette facette.

Chaque élément du système d'information appartient à une ou plusieurs Vistas. Les Vistas peuvent être modifiées par des règles. Chaque règle est représentée par un objet Règle. Cet objet peut permettre de définir des relations entre Vistas. Ainsi, une règle permet de définir que l'appartenance pour une Instance à une Vista donnée entraîne automatiquement son appartenance à une autre Vista. Ainsi, n'importe quelle Vista peut hériter d'une autre Vista à la fois de ses propriétés et de ses indicateurs. A la différence des conceptions objet où l'héritage est défini de manière fixe, dans la présente invention, les règles permettent de définir les héritages entre les différentes Vistas. Ceci permet une grande souplesse de définition des objets et classes d'objet d'un système d'information. A titre d'exemple, si on considère les trois Vistas suivantes, 1) une Vista Noeuds IP constituée de tous les éléments du réseau ou système d'information ayant une adresse IP, 2) une Vista Noeuds IPX constituée de tous les éléments du réseau ou du système d'information ayant une adresse IPX, 3) une Vista Routeur constituée de tous les équipements du système d'information ayant une fonction de routage de données. Suivant les cas, le Routeur peut être configuré pour router du protocole IP. Dans ce cas, une règle spécifiera que la règle Vista héritera de la Vista Noeuds IP. Dans un autre cas, le Routeur sera configuré pour router du protocole IPX. Dans ce cas, la règle spécifiera que la Vista Routeur hérite de la Vista IPX. Enfin, dans un dernier cas, le Routeur pourra être configuré pour router les protocoles IP et IPX. Dans ce cas, deux règles spécifieront que la Vista Routeur héritera à la fois de la Vista Noeuds IP et de la Vista Noeuds IPX.

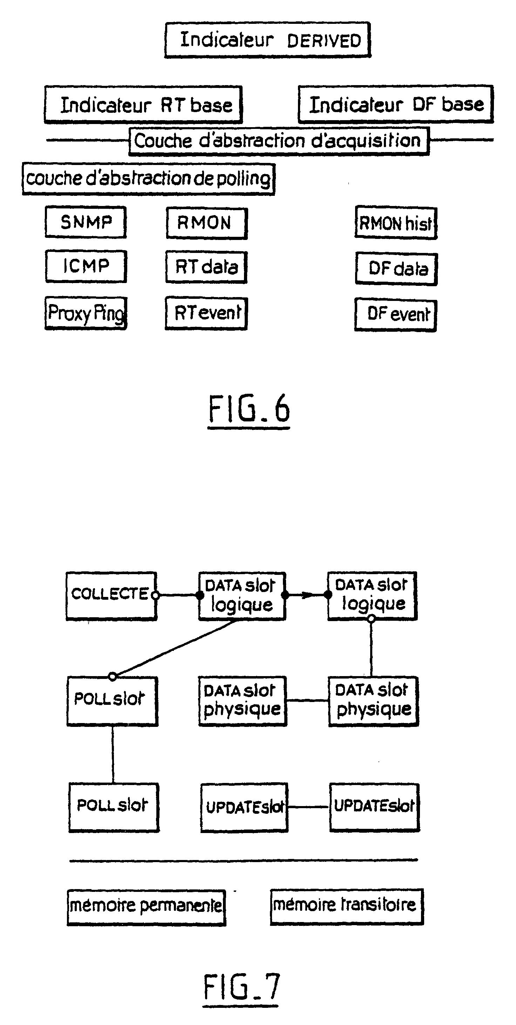

On va maintenant décrire des aspects principaux de la modélisation des Indicateurs. Chaque Indicateur est représenté par un objet Indicateur (Figure 6). A titre d'exemple, un Indicateur peut être "disponibilité" ou "qualité de service". Un Indicateur est calculé à partir de plusieurs variables ou de plusieurs autres Indicateurs, en utilisant une Formule choisie parmi une ou plusieurs Formules (Figure 5C). Le procédé selon l'invention traite deux types de variables:
- des variables temps réel,
- des variables en temps différé.

Un Indicateur calculé directement à partir de variables est appelé Indicateur de base (RTbase pour un Indicateur en temps réel ou DFbase pour un indicateur en temps différé), tandis qu'un Indicateur calculé à partir d'autres Indicateurs est appelé Indicateur dérivé (DERIVED).

On notera bien qu'il est possible de masquer à l'utilisateur cette différence entre Indicateurs de base et Indicateurs dérivés, en laissant au système la détermination automatique du type.

Les Indicateurs sont classés en trois catégories:
- les Indicateurs RTbase sont des fonctions de variables à polling temps réel. Lorsque le serveur souhaite calculer la valeur d'un tel Indicateur à un instant donné, il demande les valeurs des différentes variables nécessaires au même instant puis effectue le calcul;
- les Indicateurs DFbase sont des fonctions de variables à polling temps différé. Lorsque le serveur reçoit l'historique des variables, il met à jour les Indicateurs correspondants. Après réception et traitement des variables, plus rien ne doit distinguer les données stockées au niveau d'un Indicateur DFbase de celles stockées au niveau d'un Indicateur RTbase; c'est à dire que plus rien ne doit indiquer que les variables n'ont pas été acquises en temps réel;
- les Indicateurs dérivés (DERIVED) sont des fonctions d'autres Indicateurs (indifféremment RTbase, DFbase et DERIVED). Leur évaluation s'effectue par un mécanisme de propagation: le serveur déclenche l'évaluation d'un Indicateur dérivé (DERIVED) dès lors que les valeurs des Indicateurs le constituant sont disponibles.

Les Indicateurs dérivés (DERIVED) enrichissent les possibilités du serveur en permettant notamment:
- l'utilisation de fonctions d'agrégation multi-Instances,
- l'utilisation au sein d'une même formule d'Indicateurs RTbase et DFbase,
- l'utilisation de fonctions basées sur l'historique des données, ce que ne peuvent proposer les Indicateurs RTbase et DFbase car ils sont construits à partir des variables qui n'intègrent pas la notion d'historique.

On peut aussi associer un calendrier à un Indicateur. L'objet Calendrier spécifie les périodes de temps dans lesquelles les données sont signifiantes. une optimisation consiste à ne pas collecter des données quand celles-ci ne sont pas signifiantes.

Le type d'un Indicateur est dérivé de celui des variables ou Indicateurs qui le composent en appliquant les règles de combinaison des types par les opérateurs.

Pour un Indicateur dérivé (DERIVED), il est possible d'indiquer que l'on ne souhaite pas conserver les valeurs. Chaque demande de valeur pour l'Indicateur entraîne alors un recalcul. On peut ainsi éviter de restocker un Indicateur qui se déduit facilement d'un autre, par exemple à l'aide de l'opérateur de décalage temporel offset. Ceci permet à l'utilisateur d'arbitrer lui-même un compromis entre le volume de stockage et le temps de calcul.

La définition de chaque Indicateur comprend un délai maximal d'obtention des données. Ce délai est nul pour un Indicateur RTbase, fixé par l'utilisateur pour un Indicateur DFbase et calculé pour un Indicateur dérivé (DERIVED). L'utilisateur peut alors arbitrer lui-même entre le volume de stockage nécessaire et le délai de disponibilité des données accordé pour les variables à acquisition différée.

Le calcul d'un Indicateur consolidable s'effectue en partant des données de base collectées en temps réel, en calculant l'Indicateur puis en consolidant (par moyenne) le résultat obtenu. Le calcul d'un Indicateur non consolidable s'effectue en consolidant d'abord (par moyenne) les données de base puis en calculant l'Indicateur.

Les formules mathématiques utilisées pour calculer un Indicateur sont des expressions. Une expression peut contenir:
- des Indicateurs,
- des Variables scalaires ou dimensionnelles,
- des Paramètres de ces variables ou Indicateurs, notamment leur dimension,
- des Propriétés,
- des Opérateurs,
- des Constantes,
- du texte,
- des retours chariot.

S'agissant des opérateurs, on peut citer, outre les opérateurs arithmétiques addition, soustraction, multiplication et division: +,-, X et /, des opérateurs spécifiques tels que des opérateurs de réduction, des opérateurs de conversion et des opérateurs temporels.

Les opérateurs de réduction permettent de réduire la dimension d'une ou plusieurs expressions, par exemple, la valeur moyenne d'un Indicateur sur un groupe d'Instances, ou le minimum et le maximum.

Les opérateurs de conversion permettent de changer le type d'une expression, par exemple la conversion d'un entier en un flottant.

Les opérateurs temporels permettent d'accéder à la dimension "temps" des valeurs. Ils n'opèrent que sur des Indicateurs. Par exemple, l'opérateur BaselineDay [Indicateur, n] génère un graphe " profil journalier " ("daily Baseline") consolidé sur un ensemble de n jours. Un graphe "profil journalier" est un graphe de référence illustrant le profil moyen ou profil type d'un Indicateur sur une journée. Il est calculé en moyennant les données collectées sur n jours successifs.

Un opérateur **select** permet de réaliser un test d'expression. Si le test est vrai, la valeur de l'expression retournée par l'opérateur **select** est celle de la première expression de la liste d'arguments et sinon la valeur est celle de la deuxième expression.
Un opérateur **merge** permet de créer des paramètres composites. Il fusionne les valeurs d'une expression avec le paramètre d'une autre, afin de créer un paramètre composite. Les paramètres des deux expressions doivent être identiques.

Les Indicateurs peuvent être groupés à titre d'exemple dans des ensembles appelés Métriques. Chaque Métrique peut être représentée par un graphe ou diagramme. Les diagrammes peuvent être regroupés en tableaux de bord.

On va maintenant décrire le procédé de mesure et de suivi selon l'invention à la fois sous l'angle matériel et sous l'angle logiciel, en référence aux figures précitées.

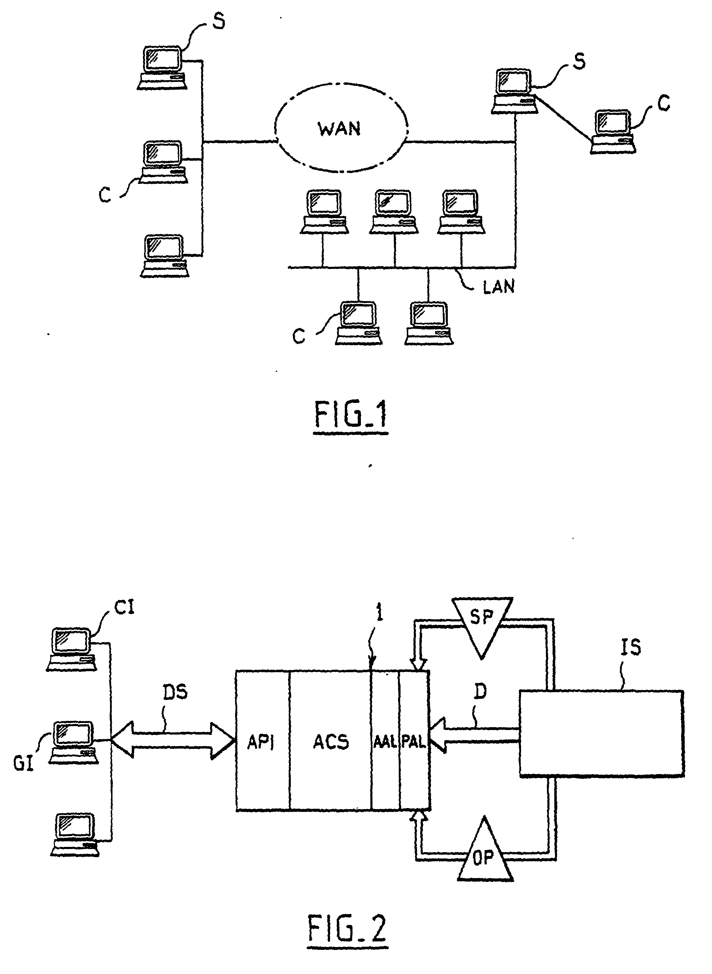

Le procédé de suivi de qualité selon l'invention est implémenté sous la forme d'un logiciel installé sur un serveur S connecté à un réseau local LAN, et sur des postes clients C locaux ou distants (WAN) en réseau, en référence à la figure 1.

Le procédé selon l'invention présente par exemple une structure 1 en relation d'une part avec un système d'information IS sur lequel vont être prélevées des données D, et d'autre part, avec des postes interfaces utilisateurs clients CI, et des postes graphiques GI, en référence à la figure 2. Les protocoles de transfert de données provenant du système d'information IS comprennent, soit des protocoles standards SP tels que les protocoles SNMP ou CMIP, soit d'autres protocoles OP. Les échanges de données entre les postes clients et le procédé sont réalisés par exemple selon le mode de transfert standard DCE.

La structure interne 1 du procédé selon l'invention comprend une première couche d'abstraction de polling PAL (Polling Abstraction Layer), une seconde couche d'abstraction d'acquisition AAL (Acquisition Abstraction Layer), une couche d'acquisition de calcul et de stockage ACS, et une couche interface API avec les postes utilisateurs. Les fonctions d'acquisition, de calcul et de stockage constituent le coeur du serveur utilisé dans le système selon l'invention. Elles sont décrites au moyen d'un modèle statique et d'un modèle dynamique. Le modèle statique est constitué d'un ensemble de structures décrivant les données que l'on souhaite obtenir. Le modèle dynamique est constitué d'un ensemble de structures et de tâches destinées à obtenir ces données. Le modèle statique s'appuie sur deux concepts fondamentaux que sont les Variables et les Indicateurs.

Le procédé de mesure de performances et de suivi de la qualité de service selon l'invention s'applique avantageusement à des systèmes d'information présentant une architecture client-serveur. Le logiciel mettant en oeuvre le procédé selon l'invention peut donc être distribué sur un ou plusieurs réseaux. Des serveurs peuvent être installés en un point d'un réseau pour assurer les acquisition de données, le traitement et le stockage. Des machines Client peuvent être installées en divers points géographiques en fonction des besoins. De cette façon, les gestionnaires des systèmes d'information et les décideurs peuvent mettre en oeuvre le procédé selon l'invention depuis leurs propres bureaux pour préparer des rapports. Les Clients et le Serveur du procédé selon l'invention communiquent par le standard de communication DCE qui permet d'assurer une intéropérabilité sur des plates-formes hétérogènes. De plus, au fur et à mesure de l'évolution du système d'information, l'architecture client-serveur permet une mise à jour indépendantes pour les logiciels Client et pour les logiciels Serveur.

Dans un serveur mettant en oeuvre le procédé selon l'invention, les données collectées, envoyées au moyen d'un protocole de réseau ou en provenance de sources de données extérieures en temps réel ou en temps différé, traversent deux couches d'abstraction. Une première couche, appelée couche d'abstraction de polling (PAL: "Polling Abstraction Layer"), crée une source de données unique pour des données en temps réel indépendamment des protocoles d'origine. La seconde couche, appelée couche d'abstraction d'acquisition (AAL: "Acquisition Abstraction Layer"), assemble les données en temps réel et les données en temps différé avant leur traitement. La fonction des couches d'abstraction est de masquer les différences entre les types de données supportées par le procédé selon l'invention. Le processeur de traitement n'a alors à traiter qu'un seul type de données temps-réel et qu'un seul type de données temps différé. Une fois que les données ont traversé les deux couches d'abstraction, on obtient des Variables homogènes, quelle que soit leur provenance.

Le logiciel installé sur les postes Clients mettant en oeuvre le procédé selon l'invention a deux fonctions: la gestion du modèle du système d'information, et la conception et la visualisation des rapports. Pour effectuer la gestion du système d'information et préparer les rapports, on a prévu deux interfaces Client: une interface de ligne de commande et une interface graphique.

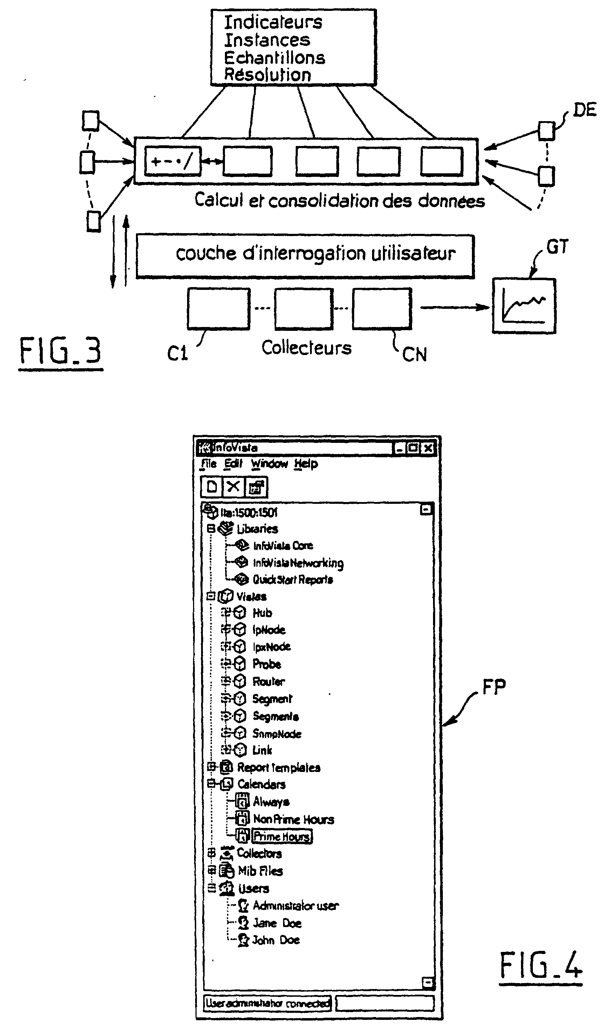

Après mise en route du logiciel implémentant le procédé selon l'invention, une fenêtre principale est visualisée, en référence à la figure 4. Cette fenêtre procure une vue globale du modèle du système d'information sous la forme d'une structure arborescente. La racine de l'arborescence représente le serveur auquel on est connecté. Les objets dans le modèle sont organisés en groupes logiques représentés chacun par des branches de la structure arborescente. Ainsi, les objets Vistas incluent, à titre d'exemple non limitatif:
- application,
- équipement IP,
- équipement IPX,
- équipement SNMP,
- segment,
- site.

D'autres branches de l'arborescence correspondent aux objets suivants:
- Rapports,
- Calendriers,
- Collecteurs,
- MIBs (Management Information Base: Structure des informations disponibles sur les sources de données),
- Utilisateurs.

A chaque groupe d'objets, par exemple les Applications, sont associées des sous-branches correspondant aux objets suivants:
- Propriétés,
- Instances,
- Indicateurs, et
- Métriques.

Le serveur mettant en oeuvre le procédé selon l'invention assure deux fonctions. Une première fonction consiste à maintenir à jour un modèle de l'infrastructure du système d'information. A chaque fois que des composants sont ajoutés, supprimés ou modifiés, le serveur met à jour automatiquement le modèle du système d'information et conserve une trace des changements. Une seconde fonction consiste à convertir les demandes des utilisateurs en un planning d'acquisition de données (Figure 3). Des Indicateurs sont ensuite calculés en fonction des demandes de l'utilisateur. Le serveur a également en charge l'horodatage et le stockage des données en fonction des besoins exprimés par les utilisateurs dans leurs requêtes.

Les requêtes des utilisateurs peuvent être considérées comme des fenêtres qui fournissent aux utilisateurs une vue partielle de l'information stockée par le serveur. L'information contenue dans les requêtes des utilisateurs est optimisée par le serveur. La forme optimisée contient des paires Instance-Indicateur et une information de temps. Toutes les informations redondantes sont détruites.

Une fois que les données ont été reçues par le serveur, les processus de consolidation, d'agrégation et de calcul commencent. Les données entrantes DE sont converties en Variables, qui servent à calculer des Indicateurs. Ces Indicateurs sont à leur tour utilisés comme base de calculs ultérieurs, par exemple d'autres Indicateurs. Des expressions et des opérateurs sont appliqués aux Variables et/ou aux Indicateurs. Les résultats sont ensuite consolidés et agrégés pour satisfaire les requêtes envoyées par les utilisateurs. Toutes les données demandées stockées par le serveur sont potentiellement disponibles. Si, dans une étape ultérieure, les utilisateurs souhaitent obtenir des données sur une plus longue période ou comparer des niveaux de performance de composant, il leur suffit simplement d'indiquer ce qu'ils souhaitent visualiser via leurs fenêtres de demande. Le serveur fera alors appel à des techniques de consolidation et d'agrégation pour analyser les données stockées, et ne visualisera que les données présentant un intérêt pour l'utilisateur.

La transformation des données en Indicateurs puis leurs représentations sous forme de graphes GT et de rapports comprend trois phases principales: l'acquisition, le calcul et le stockage.

Les données en temps réel (RT input) et en temps différé (DF input) sont reçues par le serveur. Dans une forme pratique de mise en oeuvre du procédé selon l'invention, les modes d'acquisition de données en temps réel publics (SNMP, Rmon, Rmon2, ProxyPing, ICMP) et propriétaires (RTdata pour les sources de données externes continues en temps réel, RTevent pour les sources de données externes discrètes) sont supportés.

Les modes d'acquisition de données en temps différé publics (RmonHistory) et propriétaires (DFdata pour le sources de données externes continues en temps différé, et DFevent pour les sources de données discrètes en temps différé) sont supportés.

On entend par ProxyPing un mode d'acquisition de données par lequel un processus maître, plutôt que d'envoyer directement un paquet ECHO (Ping ou ICMP) à une destination, demande à une entité tierce (Proxy) de réaliser cette opération pour son compte et de lui renvoyer le résultat.

La couche d'abstraction de polling PAL a pour fonction de regrouper les données en provenance de toutes ces sources. La couche d'abstraction d'acquisition AAL convertit les données en temps réel et en temps différé en Indicateurs.

Un Indicateur peut contenir plus d'une Formule (Figure 5C). On va maintenant décrire une manière de choisir parmi une pluralité de formules la formule à retenir. On peut prévoir que le serveur réalise une présélection de formules en fonction de la nature des Vistas auxquelles appartient cette Instance. Ensuite, le serveur vérifie que les données requises par les formules restantes sont disponibles pour calculer l'Indicateur. Si cette donnée est une Variable, le serveur interroge l'Instance pour voir si la Variable est disponible. Si elle est disponible, la Formule est considérée comme valide et sera alors utilisée dans les calculs suivants. Si la Formule n'est pas valide, le serveur essaiera d'appliquer une autre Formule de l'Indicateur jusqu'à ce qu'il en trouve une qui satisfasse les exigences. En cas de pluralité de Formules satisfaisant ces exigences, les priorités associées aux Formules décideront de la Formule à retenir. A nouveau, si une Formule valide est trouvée, elle sera conservée pour un usage ultérieur. La Formule valide sera utilisée automatiquement aussi longtemps qu'aucune modification n'est faite sur l'Indicateur. Si une Formule est ajoutée ou modifiée, toutes les Formules dans l'Indicateur sont réexaminées. Il est à noter que ce processus est transparent pour l'utilisateur. Le processus peut prendre en compte en temps réel et automatiquement toute modification, ajout ou suppression d'un élément du système d'information.

A titre d'exemple, l'Indicateur "Charge unité centrale" doit être calculé avec différentes Formules pour différents types d'équipements. Dans le cas d'une évolution du système d'information, le procédé selon l'invention prend en compte cette évolution, met à jour le modèle et applique différentes Formules et Instances au cours des calculs. Ceci est réalisé automatiquement et de façon transparente pour les utilisateurs.

Le serveur commence le calcul dés qu'il reçoit les informations nécessaires. Les Indicateurs RTbase et DFbase sont calculés lorsque les données en temps réel sont reçues. Pour les Indicateurs dérivés, le serveur conserve les données entrantes et retarde le calcul jusqu'à ce que toutes les données requises aient été reçues. Par ailleurs, les Indicateurs dérivés sont eux-mêmes calculés à partir d'autres Indicateurs (RTbase, DFbase ou même DERIVED). Les Indicateurs sont calculés à partir des Formules. Les Variables sont spécifiées dans une base d'information de gestion (MIB).

Les variables et Indicateurs traités peuvent être des scalaires mais aussi et surtout des matrices multidimensionnelles. Les dimensions de ces matrices sont des objets du modèle, par exemple, des groupes d'objets ou des sous-objets non modélisés mais implicites, par exemple, les interfaces physiques multiples d'un équipement de transmission de données.

Les opérations sur ces matrices multidimensionnelles sont réalisées suivant le principe des tableaux associatifs, ce qui contribue à une forme de généricité au niveau des Indicateurs.

Le mécanisme de stockage de données mi-s en oeuvre dans le procédé de mesure et de suivi incluant le procédé de modélisation selon l'invention est entièrement dynamique. Les données sont stockées dans des registres circulaires alloués à chaque paire Indicateur/Instance.

Les modifications apportées au modèle du système d'information sont stockées sous la forme d'objets *History.* Ces objets sont créés lorsque des Instances sont ajoutées ou supprimées d'une Collecte. Des objets History sont également créés à chaque fois qu'une Instance est ajoutée ou supprimée d'un Groupe d'Instances.

Les collectes sont l'expression directe des demandes de polling des utilisateurs. Une collecte comprend une liste d'Indicateurs, une liste d'Instances, un intervalle de polling, un intervalle de stockage et un nombre d'échantillons.

Le processus de collecte de données est réalisé sous le contrôle d'un objet Collecteur C1,..,CN (Figure 3) qui contient une liste des besoins de l'utilisateur pour le Graphe (Indicateurs à visualiser, Instances à surveiller, fréquence de visualisation, fréquence d'acquisition et nombre d'échantillons). L'objet Collecteur est constitué d'une Métrique (équivalente à plusieurs Indicateurs) et d'une ou plusieurs Instances. Il contient en outre les informations nécessaires pour la collecte des données pour un Graphe. Le Collecteur est en général créé par le système de façon automatique.

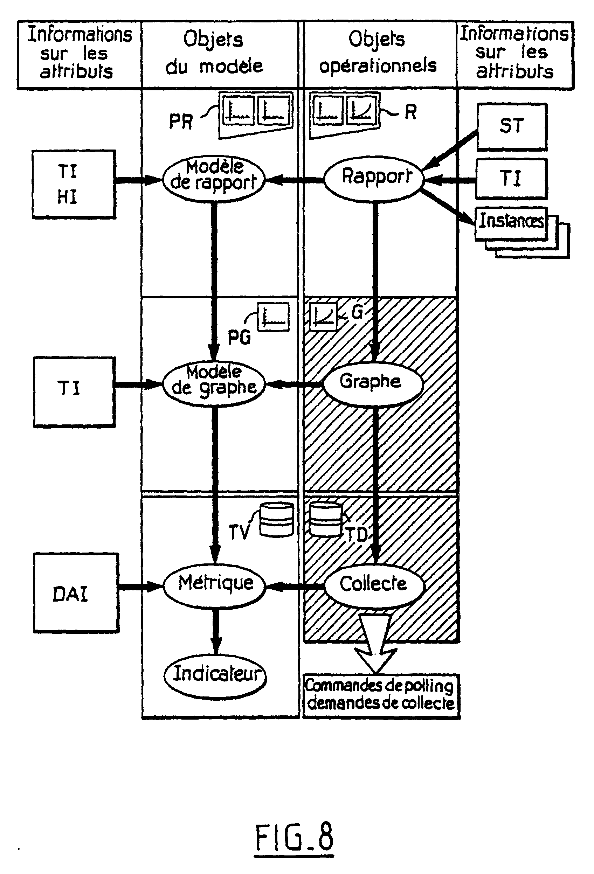

La modélisation d'un rapport fait appel, d'une part, à des objets de modélisation et, d'autre part, à des objets opérationnels, en référence à la figure 8.

L'objectif est d'obtenir des modèles de rapport génériques indépendants des Instances mais ne dépendant que de la nature des Vistas auxquelles appartiennent ces Instances. Ainsi, un modèle de rapport valable pour une ou plusieurs Vistas sera applicable à toutes Instances de cette ou ces Vistas.

On va maintenant décrire, à titre d'exemple non limitatif, un mode de réalisation du modèle dynamique mis en oeuvre dans le procédé selon l'invention.

Le modèle dynamique s'appuie sur cinq concepts fondamentaux que sont les collectes, les DATAslots logiques, les DATAslots physiques, les POLLslots et les UPDATEslots, en référence à la figure 7.

Les DATAslots logiques sont une traduction simplifiée et optimisée par élimination des demandes redondantes des collectes comprenant un Indicateur, une Instance, un intervalle de stockage et un nombre d'échantillons. Les DATAslots logiques sont liés par des relations orientées qui guident les flux de données impliqués dans la consolidation des Indicateurs et l'évaluation des Indicateurs dérivés (DERIVED). Certains DATAslots logiques constituent des points d'entrée pour les données (Indicateurs RTbase et DFbase) et sont utilisées exclusivement comme points de départ pour les relations. Ils sont les seuls à comprendre une fréquence de polling également optimisée par élimination des demandes redondantes.

Les DATAslots physiques correspondent au stockage des données dont l'acquisition et le calcul sont contrôlés par les DATAslots logiques.

Les POLLslots sont associés aux DATAslots logiques points d'entrée. Ils sont impliqués dans les opérations liées au polling:
- planification, en intégrant la gestion des calendriers,
- optimisations avancées au niveau des variables entre plusieurs Indicateurs,
- envoi de requêtes élémentaires vers les différentes sources de données,
- attente des données, gestion des timeouts, des retransmissions et du réassemblage,
- propagation des données et évaluations sous le contrôle des DATAslots logiques, et
- contrôle de flux pour la gestion de pollings dépassant les capacités du serveur.

Les UPDATEslots sont utilisés comme points de passage centralisés des données collectées avant calcul et stockage. Ils permettent un contrôle de flux aval venant en complément de celui réalisé en amont au niveau des POLLslots.

Pour un Indicateur dérivé (DERIVED), il est possible d'indiquer que l'on ne souhaite pas conserver les valeurs. Chaque demande de valeur pour l'Indicateur entraîne alors un recalcul. On peut ainsi éviter de stocker un Indicateur qui se déduit facilement d'un autre, par exemple à l'aide de l'opérateur de décalage temporel offset. Cela permet à l'utilisateur d'arbitrer lui-même le compromis entre le volume de stockage et le temps de calcul.

Tout Indicateur peut imposer un intervalle de polling minimal et/ou maximal, et par extension un intervalle d'affichage minimal, par exemple égal à l'intervalle de polling minimal. Cela ne dépend pas de l'utilisateur mais:
- des propriétés de certains opérateurs qui en introduisant la notion d'intervalle de consolidation imposent une limite supérieure sur l'intervalle de polling, par exemple l'opérateur **maxt** qui calcule l'instant auquel une variable atteint son maximum sur un intervalle de temps donné;
- de l'utilisation de la gestion calendaire qui impose à l'intervalle de polling de rester inférieur à la résolution du calendrier utilisé;
- des Indicateurs composant un Indicateur dérivé (DERIVED) qui propagent les contraintes existant à leur niveau;
- des propriétés des variables de certains protocoles (ICMP, ProxyPing) qui imposent un intervalle de polling minimal. En effet, dans le cas du ProxyPing, l'intervalle de polling doit être supérieur à la durée de réalisation de l'opération demandée au Proxy.

Pour chaque Indicateur, on maintient trois compteurs d'utilisation: l'utilisation dans un Indicateur dérivé (DERIVED) et/ou une Métrique, l'utilisation dans une collecte, et l'utilisation d'espace de stockage. Ces trois compteurs servent notamment de critères pour déterminer les modifications autorisées sur un Indicateur existant.

Il est parfois souhaitable de proposer à l'utilisateur le remplacement de la valeur brute, généralement numérique, d'un Indicateur ou d'un paramètre par une forme alternative, souvent alphanumérique, plus explicite, par exemple le remplacement d'une adresse IP par le nom de l'Instance. Deux approches sont possibles:
- une approche statique: le choix de la représentation fait partie de la définition du rapport et le serveur envoie la représentation indiquée au client;
- une approche dynamique: le serveur fournit l'ensemble des représentations possibles aux clients qui proposent à l'utilisateur un réglage dynamique de l'affichage à l'aide d'un menu contextuel.

Dans les deux cas, le client indique, de manière optionnelle, au niveau de la collecte, les alternatives à renvoyer pour les valeurs des Indicateurs et des paramètres. Une seule configuration est suffisante puisque tous les Indicateurs d'une collecte ont le même type et les mêmes paramètres.

Chaque DATAslot logique est identifié de manière unique par un triplet <*rate*, *Indicateur, Instance>* dans lequel rate est la fréquence de stockage. Les POLLslots dans lesquels <Indicateur, Instance> sont égaux constituent une ligne de consolidation. Chaque emplacement (slot) regroupe les demandes des différentes collectes en terme de nombre d'échantillons et de fréquence de polling. Des demandes d'origine interne, dans le cadre d'optimisations, complètent le triplet précité.

Le nombre d'échantillons à conserver pour chaque emplacement (slot) correspond à la plus grande demande. La fréquence de polling n'est utilisée que par les POLLslots qui constituent des points d'entrée et elle est calculée en prenant le maximum de toutes les demandes pour la ligne de consolidation.

Les DATAslots logiques sont liés par des relations orientées qui guident les flux de données impliqués dans la consolidation des Indicateurs et l'évaluation des Indicateurs dérivés (DERIVED).

En entrée, on conserve le type et le slot de provenance de chaque relation. En sortie, on conserve le slot de destination de chaque relation. Les POLLslots qui n'ont aucune relation en sortie sont des points terminaux pour le flux de données.

Les intervalles de polling et de stockage sont indiqués à l'aide d'un multiple n d'une unité de base. L'accumulation des intervalles est de préférence périodiquement resynchronisée par rapport à une base supérieure.

Les DATAslots logiques et les relations ne sont pas conservés lors de l'arrêt du serveur. Ils sont reconstruits à son démarrage par le démarrage implicite de toutes les collectes actives lors de l'arrêt du serveur.

Les différentes opérations qui concernent directement ou indirectement les DATAslots logiques sont la création, la modification, la destruction, mais également l'arrêt et le démarrage.

Les DATAslots logiques et les relations correspondant à une collecte sont créés lors de son démarrage, qui peut être explicitement demandé lors de la création, et détruits lors de son arrêt, implicite lors de la destruction. La modification n'a d'impact que si la collecte est active.

L'évaluation d'un Indicateur RTbase (cf. figure 6) consiste à calculer un résultat à partir de données d'un UPDATEslot. L'évaluation d'un Indicateur dérivé (DERIVED) consiste comme pour un Indicateur RTbase à calculer un résultat à partir des données d'un UPDATEslot. L'évaluation par consolidation s'effectue par calcul de la moyenne sur un intervalle. Son calcul s'effectue par intégration d'une fonction affine par morceaux. Afin que l'intégration couvre la totalité de l'intervalle, il est nécessaire d'obtenir les valeurs aux limites. Pour cela, on effectue si nécessaire une interpolation avec la dernière valeur de l'intervalle précédent, respectivement la première valeur de l'intervalle suivant. Ces valeurs ne sont pas prises en compte dans le calcul de la qualité de l'information (nombre de mesures utilisées pour le calcul de l'Indicateur).

Dans le cas extrême où la valeur sur l'intervalle provient de l'interpolation entre deux points n'appartenant pas à l'intervalle, la qualité (en nombre de points utilisés) est nulle. Si l'interpolation est nécessaire mais que l'on ne dispose pas des données pour l'effectuer, on se résout à effectuer l'intégration sur une partie seulement de l'intervalle.

Le point d'entrée du stockage des données collectées est le couple <Indicateur, Instance>. Pour chaque couple, on entretient un ensemble de combinaisons rencontrées des valeurs des paramètres de l'Indicateur, et pour chaque combinaison un historique de la variation de l'Indicateur. L'historique est réparti dans une liste de DATAslots. Chaque emplacement (slot) est caractérisé par trois informations principales: sa taille logique, sa taille physique et sa résolution.

Le stockage fonctionne de manière cyclique au niveau de chaque emplacement (slot): chaque nouvelle donnée stockée écrase la plus ancienne. Lorsque la valeur d'un Indicateur est quasiment constante et que des plages de valeur constante existent, il est possible de réduire l'espace de stockage nécessaire à l'aide d'un mécanisme de "copy on write" (stockage de la valeur une seule fois et stockage des références pour les occurrences suivantes) pour les chaînes de caractères et autres données de taille variable.

Par ailleurs, on peut prévoir d'autres formes d'optimisation. Par exemple, dès que trois valeurs successives sont égales, on supprime la valeur intermédiaire. La mise en place effective de ce mécanisme suppose de conserver la taille physique inférieure à la taille logique si celle-ci se révèle suffisante pour stocker sous forme optimisée un nombre d'échantillons égal à la taille logique.

Lorsque des pollings sont arrêtés et/ou supprimés par l'utilisateur, cela se traduit par une diminution de la taille logique de certains POLLslots. Dans le cas le plus extrême, cette taille peut être réduite à zéro.

La taille physique n'est pas immédiatement réduite afin d'éviter la disparition trop brutale des données stockées. On détruit les données à un rythme égal à celui de l'écrasement cyclique. Lorsque la taille physique atteint zéro, le slot est complètement supprimé. Cela n'a aucune conséquence car sa liaison avec un DATAslot logique avait disparu au moment du passage à zéro de sa taille logique.

La résolution des données stockées peut être localement inférieure ou supérieure à la résolution du slot à la suite d'aléas de collecte. Cela est sans conséquence puisque chaque valeur est accompagnée d'un horodatage.

Le stockage des valeurs s'effectue par exemple par "colonne" entière, c'est à dire que l'on reçoit simultanément et que l'on stocke, référencées par le même horodatage, les valeurs individuelles correspondant aux différentes combinaisons des valeurs des paramètres.

Le POLLslot est la représentation logique des pollings de chaque couple <Indicateur, Instance> concerné. Il contient les informations suivantes:
- en provenance de l'Indicateur,
   - la liste des variables,
   - la liste des paramètres de chaque variable,
   - le calendrier,
- en provenance de l'Instance,
   - la Vista et le nom de l'Instance,
   - toutes les valeurs de propriété utilisées par le polling, par exemple l'adresse IP et les noms de communauté SNMP,
- en provenance du DATAslot logique,
   - la fréquence de polling,
- un lien vers le DATAslot logique.

L'ensemble des informations précitées sont figées en dehors d'une modification des collectes par l'utilisateur. Chaque emplacement (slot) contient également l'horodatage et le type de la prochaine action le concernant à effectuer.

La fréquence de polling permet de définir au niveau de chaque POLLslot un échéancier de polling. Chaque action possible doit s'effectuer dans un laps de temps bien délimité relatif à cet échéancier.

En cas d'absence de réponse d'un équipement, on procède à une réémission des requêtes. Celle-ci intervient après un intervalle qui est doublé à chaque nouvelle absence de réponse et divisé par deux en cas de réponse. La valeur initiale et minimale est de 1 s, la valeur maximale dépend de la limite d'émission de la dernière requête d'un polling.

Pour l'implémentation de la gestion calendaire au niveau du polling, il suffit de prendre en compte le calendrier lors du calcul de l'horodatage du prochain polling.

A la fin d'un polling, terminé normalement ou par une erreur, on calcule la date du prochain polling.

Ce mécanisme permet la gestion d'erreurs ponctuelles. En cas de sous-capacité chronique du serveur, ce mécanisme conduit inévitablement à une saturation des processus d'évaluation puisqu'il est plus rapide de créer un UPDATEslottimeout que de le stocker. Il est nécessaire d'implémenter un mécanisme de diminution des fréquences de polling contrôlé conjointement par les threads de polling et les threads d'évaluation.

Un optimisation essentielle au niveau du polling est le traitement global de plusieurs POLLslots qui arrivent à échéance simultanément. Il est nécessaire que les différents POLLslots arrivent à échéance sur la même opération (par exemple, envoi de données, attente d'une donnée) et que tout ou partie des variables proviennent d'une même Instance commune à tous les POLLslots.

Il faut ensuite déterminer si le traitement global procure un gain quelconque. Comme cela ne dépend que des caractéristiques statique des POLLslots, on peut envisager de conserver le résultat une fois déterminé.

En ce qui concerne le polling, le gain recherché est un gain de bande passante au détriment éventuel de la charge de l'unité centrale. Le gain est optimal lorsque les POLLslots ont des variables communes, mais on peut espérer un gain même dans le cas contraire compte tenu du surplus d'information ("overhead") nécessaire à l'encodage d'un paquet réseau si le protocole utilisé permet de demander plusieurs variables dans un même paquet.

Concernant le protocole SNMP, le traitement global ne doit pas conduire à dépasser la taille limite d'un paquet. Ce dépassement est en effet traité pour l'instant comme une erreur et même si un mécanisme de reprise est ultérieurement mis en oeuvre, il est plus coûteux que le gain espéré. Il n'y a cependant aucun risque lorsque les différents POLLslots ont la même liste de variables ou lorsque les variables sont toutes de taille connue.

Un UPDATEslot contient l'ensemble des informations nécessaires à l'évaluation d'un Indicateur RTbase:
- une liste de couples <variable, valeur>, la présence potentielle de variables inutilisées dans l'évaluation devant être prise en compte,
- un horodatage unique, et
- une référence vers le DATAslot logique à utiliser comme point de départ de l'évaluation.

Les UPDATEslots sont créés au niveau des POLLslots par la consolidation des résultats partiels. Une fois complets, ils sont détachés des POLLslots et placés dans une liste globale.

Ceci permet de paralléliser le traitement des résultats du polling n et l'exécution du polling n+1. L'existence d'un point central de regroupement permet une rétroaction sur le polling en cas d'accumulation de résultats non traités.

Les UPDATEslots sont pris en charge par plusieurs routines de test de calcul qui prennent en charge les calculs directs, indirects (propagation) et le stockage des résultats.

La modélisation des Variables mise en oeuvre dans le procédé selon l'invention inclut la modélisation SNMP, mais a été largement étendue pour pouvoir modéliser des variables issues de sources quelconques et être en particulier indépendante des protocoles.

On distingue entre autres les catégories suivantes de paramètres de Variables correspondant à différents cas d'utilisation:
*régulier* Le paramètre correspond à une dimension de la variable. La dimension d'une variable est donc son nombre de paramètres réguliers. Les différentes valeurs possibles sont récupérées lors du polling. Il s'agit de l'utilisation la plus classique.
   exemple: ifInOctets [ifIndex]
   où ifIndex représente le numéro de l'interface de l'équipement.
*instance* Le paramètre ne correspond plus à une dimension de la variable car sa valeur est unique. Cette valeur est une valeur de propriété de l'Instance à laquelle cet Indicateur est appliqué. Ce n'est pas une propriété intrinsèque du paramètre mais une utilisation possible de tout paramètre de la catégorie régulier.
   exemple: ifInOctets[ifIndex=Interface]
   où Interface est une propriété de la Vista sur laquelle est défini cet Indicateur.
*inline* La paramètre ne correspond plus à une dimension de la variable car sa valeur est unique. Cette valeur est fixée par l'utilisateur lors de la saisie du nom de variable au sein d'une formule.
   exemple: ciscoPingAvgRtt[ciscoPingProtocol=IP]
*automatic* Le paramètre ne correspond plus à une dimension de la variable car sa valeur est unique. Elle est le résultat d'une manipulation interne au logiciel.
   exemple: etherStatsPkts[etherStatsIndex=automatic]
*monotonic* Le paramètre est toujours croissant à chaque nouvelle acquisition de données.
*composite* La définition d'un paramètre composite s'effectue indépendamment des formules d'un indicateur. Par contre, son implémentation qui consiste à récupérer une variable supplémentaire et à effectuer une sorte de substitution de paramètre entre la valeur de l'indicateur et celle de la variable s'exprime facilement dans la grammaire:
   *exemple:* B [ifIndex/ifDescr, srcAddr, dstAddr] = merge(A[Ifindex,srcAddr, dstAddr], ifDescr[ifIndex])

Pour les besoins du procédé selon l'invention, on a été amené à étendre la notion de fichier MIB (Management Information Base) au delà de l'acception classique (SNMP) pour pouvoir prendre en compte les nouveaux types de variables décrits précédemment. Les fichiers MIB traditionnels utilisant la syntaxe ASN.1 sont trop limités pour exprimer toute la richesse sémantique que l'on souhaite associer aux Variables dès leur définition. De plus, les variables SNMP ne représentent qu'une partie des Variables du procédé selon l'invention. Cependant, ces fichiers MIB traditionnels couvrent une partie non négligeable de la problématique de définition de Variables. Dans la suite, le terme MIB sera utilisé dans son acception étendue telle que définie précédemment.

Une base MIB peut être considérée comme homogène au niveau de la définition des variables et par extension pour leur affichage et/ou leur désignation. Par contre, le mécanisme à mettre en oeuvre pour récupérer la valeur d'une variable diffère d'une variable à l'autre.

Quand un fichier MIB est chargé, le serveur analyse son contenu et crée une ou plusieurs bases MIB. La base MIB est intégrée dans une arborescence standard d'enregistrement pour la dénomination des objets gérés. Au même moment, le serveur crée des objets pour représenter les noeuds dans la base MIB. Les objets créés par le procédé selon l'invention sont représentés dans une structure arborescente à n niveaux, par exemple quatre: les Variables, les Groupes, les Modules et les Paramètres. Les Variables sont les seuls éléments de l'arborescence nécessaires au fonctionnement du serveur.

Il existe trois cas typiques d'utilisation des bases MIB:
- un équipement du système d'information supportant le protocole standard SNMP, fourni avec des agents SNMP que le procédé selon l'invention peut interroger pour obtenir des données;
- un équipement du système d'information supportant un protocole spécifique, fourni avec ses propres agents et son propre fichier MIB spécifique;
- un équipement non fourni avec un fichier MIB, pour lequel on peut écrire un fichier MIB en utilisant la syntaxe supportée par le procédé selon l'invention. Ceci sera utilisé notamment pour les données non accessibles via SNMP.

Pour la mise en oeuvre pratique du procédé selon l'invention, les tâches suivantes doivent être envisagées:
- création de fichiers MIBs,
- création de Vistas,
- création de Variables,
- création d'Indicateurs,
- création de Modèles de rapport,
- création d'Instances,
- création de Rapports instanciés (association d'Instances avec un modèle de Rapport),
- modification des Rapports, et
- fonctions d'administration.

Les Variables constituent la base du calcul des Indicateurs. Pour connaître quelles Variables sont disponibles sur un élément du système d'information, on lit préalablement les fichiers MIB définis sur cet élément. Le serveur crée alors une liste des Variables disponibles par analyse des fichiers MIB associés aux bases MIB.

Au cours de l'analyse d'un fichier MIB, le serveur crée les objets MIB, Module, Groupe et Variable, correspondant aux noeuds de la base MIB, en référence à la figure 8.

La configuration d'une source de données externes nécessite, d'une part, d'indiquer au système quelles Variables sont disponibles, sur quel système ces Variables sont disponibles et quel protocole doit être utilisé pour accéder à ces Variables, et d'autre part, de configurer les éléments qui vont opérer avec le système selon l'invention.

Ces opérations sont de préférence réalisées automatiquement. L'objet Groupe de la base MIB indique le protocole d'acquisition associé à chaque variable. Le système tente ensuite d'obtenir l'information requise pour calculer chaque paire Instance-Indicateur sur le Collecteur.

Si l'information requise est une Variable, le procédé selon l'invention effectue un polling sur l'Instance spécifiée. Si le modèle a été correctement configuré par l'utilisateur, l'Instance fournit les données demandées.

Si le modèle n'a pas été correctement configuré, l'Instance interrogée retourne un message d'erreur. Le Serveur conserve en mémoire le fait que la paire Instance-Indicateur est invalide, et le Collecteur est refusé.

Le Collecteur représente un ensemble de paires Instance-Indicateur. L'état de chaque paire est surveillé par le serveur et est représenté par un objet Etat.

La compilation d'une formule nécessite, dans un exemple d'implémentation pratique, la connaissance du type de l'Indicateur (Indicateur de base ou Indicateur dérivé) et de la Vista associée.

Lorsqu'un client envoie une nouvelle formule au serveur, un évaluateur compile la formule. Cette compilation a pour fonction de vérifier que la formule est conforme à la syntaxe et d'accélérer l'évaluation de la formule. La forme compilée de la formule doit être persistante. Le serveur ne recompile pas les formules à chaque redémarrage. Au cours de la compilation, la formule est représentée par un graphe direct acyclique (DAG) dont les feuilles sont soit des constantes, soit des variables pour les formules d'Indicateurs de base ou des Indicateurs pour les formules d'Indicateurs dérivés.

L'analyseur lexical connaît le type de l'Indicateur auquel appartient la formule en cours de compilation. Il sait donc si un identificateur appartient à l'espace de noms des variables ou à celui des Indicateurs.

Un identificateur peut être soit un identificateur complet, soit un identificateur incomplet. Dans ce cas, la référence est ambiguë et l'interrogation du système d'information peut retourner une liste de variables ou d'Indicateurs. La classe *SMIvariable* et la classe *ISindicator* doivent fournir une méthode d'interrogation de la base qui retourne la liste des objets sélectionnés.

La construction des expressions passe par une sélection de l'opérateur et un calcul du type de l'expression. Les paramètres de l'expression sont sélectionnés en soustrayant des paramètres des opérandes d'un opérateur les paramètres servant à la réduction. Si les opérandes n'ont pas les mêmes paramètres, une relation d'inclusion doit exister entre les différentes listes de paramètres. Les paramètres de la liste de réduction sont soustraits de la liste englobante.

Pour chaque opérande, le compilateur crée un tableau permettant de faire la correspondance entre ses paramètres et les paramètres de la liste englobante.

Le compilateur crée des paramètres dans le système d'information dans le cas des paramètres composites et des alias de paramètres. Le compilateur recopie les types associés plutôt que de partager le type avec le paramètre ou la variable source. Ce choix est fait pour simplifier le déchargement d'objets de la base.

La forme compilée est constituée d'une série d'instructions de code intermédiaire et d'un fichier registre ("register file"). Le fichier registre permet aux instructions de se communiquer leurs résultats. C'est un tableau qui pointe vers des valeurs (*DATAvalue* ou *DATAvalueNP*). Le nombre de registres est déterminé pendant la compilation. C'est une propriété de la formule et de l'Indicateur. Il correspond au nombre d'Instances de la classe *EVALexpr*. Chaque registre a un état (vide ou initialisé) et un Indicateur permettant de savoir si sa valeur peut être détruite. Cette dernière information permet dans certains cas de réutiliser pendant l'évaluation l'objet *DATAvalue* ou *DATAvalueNP* pointé par le registre. Afin de pouvoir initialiser le fichier registre au début de l'évaluation, le compilateur doit construire la liste des registres à initialiser.

Au fur et à mesure de l'analyse de la formule, le compilateur émet des instructions de code intermédiaire. Les opérandes d'une instruction proviennent de trois sources:
- des données *EVALdata* de l'invocation de l'évaluateur,
- des résultats d'autres instructions,
- des constantes générées durant la phase de compilation.

Chaque opérande est accédé à travers un registre qui lui est réservé. Un tableau **arguments_** contient le numéro de registre des arguments de l'opérateur et result_ est le numéro de registre du résultat.

Chaque évaluation d'une formule nécessite l'allocation d'un nouveau fichier registre. Son initialisation se fait en deux étapes:
- initialisation des registres contenant les constantes,
- initialisation des registres accédant aux valeurs de l'*EVALdata*.

Les instructions sont exécutées séquentiellement. Une instruction est exécutée en appelant son opérateur.

Bien sûr, l'invention n'est pas limitée aux exemples qui viennent d'être décrits et de nombreux aménagements peuvent être apportés à ces exemples sans sortir du cadre de l'invention. On peut en outre mettre en oeuvre le procédé selon l'invention pour la mesure de performances et le suivi de qualité d'un processus industriel, dès lors que ce processus met en oeuvre des composants, équipements, réseaux et applications logicielles susceptibles de fournir des données en temps réel ou en temps différé qui puissent être traitées de façon analogue à ce qui vient d'être décrit. Par ailleurs, bien que l'exemple de mise en oeuvre du procédé de mesure et de suivi selon l'invention qui vient d'être décrit mette en oeuvre un procédé particulier de modélisation faisant lui-même l'objet d'une demande de brevet, le procédé selon l'invention peut fort bien mettre en oeuvre d'autres techniques de modélisation sans pour autant sortir du cadre de la présente invention.

## Revendications

1. Procédé de mesure des performances et de suivi de la qualité de service d'un système d'information, ce procédé comprenant:
- une étape de collecte des données au sein de ce système d'information, en provenance de diverses sources de données, notamment:
1) des données de différents types par polling en temps réel,
2) des données de différents types, notamment des données continues ou discrètes (événements), collectées en temps réel en provenance d'une source externe, et
3) des données, notamment des données continues ou discrètes (événements), collectées en temps différé en provenance d'une source externe,
- une étape de traitement de ces données et de calcul d'Indicateurs, et
- une fourniture de rapports de performance et/ou de qualité de service au sein de ce système d'information,
**caractérisé en ce qu'**il comprend en outre une étape d'homogénéisation des données collectées, dans laquelle les différences entre les types desdites données collectées sont masquées de sorte que l'étape de traitement suivante ne porte que sur un seul type de données en temps réel et que sur un seul type de données collectées en temps différé.

2. Procédé selon la revendication 1, **caractérisé en ce que** l'étape d'homogénéisation comprend une étape, dite d'abstraction de polling, pour regrouper des données collectées en temps réel en provenance de diverses sources de données.

3. Procédé selon la revendication 2, **caractérisé en ce que** l'étape d'homogénéisation comprend en outre une étape, dite d'abstraction d'acquisition, pour homogénéiser des données en temps réel issues de l'étape d'abstraction de polling.

4. procédé selon la revendication 3, **caractérisé en ce que** l'étape d'abstraction d'acquisition est en outre agencée pour homogénéiser des données en temps différé.

5. Procédé selon l'une des revendications précédentes, **caractérisé en ce qu'**un Indicateur contient une pluralité de Formules, et **en ce que** le processus de traitement comprend, pour chaque Indicateur demandé, un processus de sélection dynamique d'une Formule parmi plusieurs Formules associées à cet Indicateur, en vue du choix d'une formule optimale pour le calcul dudit Indicateur.

6. Procédé selon la revendication 5, **caractérisé en ce que** le choix dynamique d'une Formule est réalisé en fonction de la nature de l'Instance pour laquelle est demandé l'Indicateur, et/ou du bon fonctionnement de ladite Formule sur l'Instance en question, et/ou
de conditions de priorité au sein de la pluralité de Formules.

7. Procédé selon l'une quelconque des revendications précédentes, **caractérisé en ce qu'**il comprend en outre une modélisation du système d'information permettant de rattacher lesdits Indicateurs à des objets du système d'information.

8. Procédé selon l'une des revendications précédentes, **caractérisé en ce que** les Indicateurs sont multidimensionnels.

9. Procédé selon la revendication 8, **caractérisé en ce que** les Indicateurs multidimensionnels sont calculés par des techniques de calcul associatif.

10. Procédé selon l'une des revendications 8 ou 9, **caractérisé en ce que** les dimensions des Indicateurs correspondent à des groupes d'Instances du système d'information et/ou de sous-objets de ces Instances.

11. Procédé selon l'une quelconque des revendications précédentes, **caractérisé en ce qu'**il comprend en outre un processus de stockage historique des Indicateurs, et/ou des modifications des Instances du système d'information.

12. Procédé selon l'une quelconque des revendications précédentes, **caractérisé en ce que** les objets traités et générés sont stockés dans une base de données objet.

13. Système pour mesurer les performances et suivre la qualité de service au sein d'un système d'information, mettant en oeuvre le procédé selon l'une quelconque des revendications précédentes, comprenant:
- des moyens pour modéliser et collecter des données de différents types en provenance de diverses sources de données au sein du système d'information,
- des moyens pour traiter les données collectées et pour fournir des indicateurs de qualité de service, et
- des moyens pour générer des rapports et/ou graphes à partir de ces indicateurs,
**caractérisé en ce qu'**il comprend en outre des moyens pour homogénéiser des données collectées en provenance de diverses sources de données, agencés pour masquer les différences entre les types de données collectées de sorte que les moyens de traitement ne traitent qu'un seul type de données collectées en temps réel et un seul type de données collectées en temps différé.

14. Application du procédé et du système selon l'une quelconque des revendications précédentes, à la mesure des performances et au suivi de qualité d'un processus industriel.

## Claims

1. Process for measuring performances and monitoring service quality of an information system, this process comprising:
- a step of acquiring the data within this information system, from various data sources, in particular:
1) data of different type by real-time polling,
2) data of different type, in particular continuous or discrete data (events), acquired in real time from an external source, and
3) data, in particular continuous or discrete data (events), acquired in deferred time from an external source.
- a step of processing these data and of calculating Indicators, and
- supply of performance and/or service quality reports within this information system,
**characterized in that** it further comprises a step of homogenizing the acquired data, in which the differences between the type of said acquired data are masked so that the following stage of processing concerns only one type of data in real time and only one type of data acquired in deferred time.

2. Process according to claim 1, wherein said homogenization step comprises a stage known as a polling abstraction stage, to group data acquired in real time from various data sources.

3. Process according to claim 2, **characterised in that** the step of homogenization further comprises a stage known as an acquisition abstraction stage, to homogenize real-time data originating from the polling abstraction stage.

4. Process according to claim 3, **characterised in that** the acquisition abstraction stage is further arranged to homogenize deferred-time data.

5. Process according to anyone of the preceding claims, **characterised in that** an Indicator contains a plurality of Formulas, and **in that** the processing process includes, for each Indicator requested, a dynamic choice process of a Formula from. a plurality of Formulas associated with this Indicator, in order to choose an optimal formula for computing said Indicator.

6. Process according to claim 5, **characterised in that** the dynamic choice of a Formula is achieved in function of the. nature of the Instance for which the Indicator is requested, and/or of the right operation of said Formula on said Instance, and/or of priority conditions within said plurality of Formulas.

7. Process according to anyone of the preceding claims, **characterised in that** it further comprises a modelling of the information system for attaching said Indicators to objects of the information system.

8. Process according to anyone of the preceding claims, wherein the Indicators are multidimensional.

9. Process according to claim 8, **characterised in that** the multidimensional Indicators are computed by associative computing methods.

10. Process according to anyone of claims 8 or 9, **characterised in that** the dimensions of the Indicators correspond to groups of Instances of the information system and/or of sub-objects of these Instances.

11. Process according to anyone of the preceding claims, **characterised in that** it further comprises a process for historically storing the Indicators, and/or modifications of the Instances of the information system.

12. Process according to anyone of the preceding claims, wherein the processed and generated objects are stored in an object database.

13. System for measuring the performances and monitoring the service quality within an information system, implementing the process according to any of preceding claims, this system comprising:
- means for modelling and collecting data of different type from various data sources within the information system,
- means for processing the collected data and for supplying service quality indicators, and
- means for generating reports and/or graphs from these indicators,
**characterised in that** it further comprises means for homogenizing acquired data from various data sources, arranged to mask the difference between the type of data acquired so that the processing means process only one type of data acquired in real time and only one type of data acquired in deferred time.

14. Application of the process and the system according to any of preceding claims, for measuring performances and for monitoring service quality of an industrial process.

## Patentansprüche

1. Verfahren zur Leistungsmessung und zur Beobachtung der Qualität eines Informationssystems, bei dem das Verfahren folgendes aufweist:
- Einen Schritt zur Sammlung von Daten für dieses Informationssystem aus verschiedenen Datenquellen, insbesondere:
1) Verschiedene durch Echtzeitpolling gewonnene Datentypen,
2) Verschiedene, in Echtzeit gewonnene, aus externen Quellen herrührende Datentypen, insbesondere stetige und unstetige Daten (Ereignisse), und
3) Verschiedene, zeitversetzt gewonnene, aus externen Quellen herrührende Datentypen, insbesondere stetige und unstetige Daten (Ereignisse),
- Einen Schritt zur Verarbeitung dieser Daten und zur Berechnung von Indikatoren, und
- Die Lieferung eines Leistungs- und/oder Qualitätsberichts für dieses Informationssystem,
**dadurch gekennzeichnet, dass** das Verfahren außerdem einen Homogenisierungsschritt für die gesammelten Daten aufweist, bei dem die Unterschiede zwischen den Typen der besagten gesammelten Daten derart maskiert werden , **dass** der folgende Verarbeitungsschritt sich nur auf einen einzigen Echtzeitdatentyp und auf einen einzigen Typ von Daten, die zeitversetzt gesammelt worden sind, bezieht.

2. Verfahren nach Anspruch 1, **dadurch gekennzeichnet, dass** der Homogenisierungsschritt einen sogenannten Polling-Abstraktionsschritt zur Gruppierung von in Echtzeit von verschiedenen Datenquellen herrührenden Daten aufweist.

3. Verfahren nach Anspruch 2, **dadurch gekennzeichnet, dass** der Homogenisierungsschritt außerdem einen sogenannten Erfassungs-Abstraktionsschritt zur Homogenisierung von aus dem Polling-Abstraktionsschritt herrührenden Echtzeitdaten aufweist.

4. Verfahren nach Anspruch 3, **dadurch gekennzeichnet, dass** der Erfassungs-Abstraktionsschritt außerdem so ausgestaltet ist, **dass** er die Daten zeitversetzt homogenisiert.

5. Verfahren nach irgendeinem der vorangehenden Ansprüche, **dadurch gekennzeichnet, dass** ein Indikator eine Mehrzahl von Formeln aufweist und **dass** das Verarbeitungsverfahren für jeden nachgefragten Indikator ein dynamisches Auswahlverfahren für eine von mehreren diesem Indikator zugeordneten Formeln und/oder Prioritätsbedingungen für mehrere Formeln aufweist.

6. Verfahren nach Anspruch 5, **dadurch gekennzeichnet, dass** die dynamische Auswahl einer Formel in Abhängigkeit von der Natur der Instanz für die der Indikator angefordert worden ist, durchgeführt wird und/oder vom guten Funktionieren der besagten Formel bei der in Frage kommenden Instanz und/oder von Prioritätsbedingungen bei der Vielzahl von Formeln abhängt.

7. Verfahren nach irgendeinem der vorangehenden Ansprüche, **dadurch gekennzeichnet, dass** es außerdem eine Modellierung des Informationssystems vorsieht, wodurch es möglich wird, die besagten Indikatoren Objekten des Informationssystems zuzuordnen.

8. Verfahren nach irgendeinem der vorangehenden Ansprüche, **dadurch gekennzeichnet, dass** die Indikatoren mehrdimensional sind.

9. Verfahren nach Anspruch 8, **dadurch gekennzeichnet, dass** die mehrdimensionalen Indikatoren mit Hilfe von Techniken der assoziativen Kalkulierung berechnet werden.

10. Verfahren nach Anspruch 8 oder 9, **dadurch gekennzeichnet, dass** die Dimension der Indikatoren Instanzengruppen des Informationssystems und/oder Unterobjekten dieser Instanz entspricht.

11. Verfahren nach irgendeinem der vorangehenden Ansprüche, **dadurch gekennzeichnet, dass** es außerdem ein historisches Speicherverfahren der Indikatoren und/oder der Änderungen der Instanzen des Informationssystems aufweist.

12. Verfahren nach irgendeinem der vorangehenden Ansprüche, **dadurch gekennzeichnet, dass** die verarbeiteten und erzeugten Objekte in einer Objektdatenbasis gespeichert werden.

13. System zur Leistungsmessung und zur Beobachtung der Qualität eines Informationssystems, welches das Verfahren nach irgendeinem der vorangehenden Ansprüche ausführt und folgendes aufweist:
- Mittel zur Modellierung und Sammlung von verschiedenen Datentypen aus verschiedenen Datenquellen aus dem Informationssystem,
- Mittel zur Verarbeitung der gesammelten Daten und zur Auslieferung von Qualitätsindikatoren, und
- Mittel zur Erzeugung von Berichten und/oder Graphen mit Hilfe dieser Indikatoren,
**dadurch gekennzeichnet, dass** es außer der Mittel zur Homogenisierung von aus verschiedenen Datenquellen gesammelten Daten, welche derart angeordnet sind, **dass** sie die Unterschiede zwischen den gesammelten Datentypen maskieren, damit die Verarbeitungsmittel nicht nur einen einzigen in Echtzeit bzw. zeitversetzt gewonnenen Datentyp verarbeiten, aufweist.

14. Anwendung des Verfahrens und des Systems nach irgendeinem der vorangehenden Ansprüche auf die Leistungsmessung und Beobachtung der Qualität eines industriellen Prozesses.
